# EUROPÄISCHE PATENTSCHRIFT

(11) **EP 0 396 950 B1**
(45) Veröffentlichungstag und Bekanntmachung des Hinweises auf die Patenterteilung: **21.09.1994**
(21) Anmeldenummer: 90107635.6
(22) Anmeldetag: 23.04.1990
(51) Int. Cl.: C08L 9/00, C08L 23/02, C08L 53/02

(54) **Verwendung einer Polymerlegierung aus Polybutadien und olefinischen Thermoplasten**
Use of a polymeric alloy comprising polybutadiene and olefinic thermoplastics
Utilisation d'un alliage polymère comprenant du polybutadiène et des matières thermoplastiques oléfiniques

(30) Priorität: 10.05.1989 DE 3915267
(43) Veröffentlichungstag der Anmeldung: 14.11.1990
(73) Patentinhaber: REHAU AG + Co, 95111 Rehau (DE)
(72) Erfinder:

(56) Entgegenhaltungen:
- EP-A- 0 127 320
- DE-A- 3 015 448
- GB-A- 2 108 943
- US-A- 4 386 179
- DATABASE WPIL, Nr. 88-087248 [13], Derwent Publications Ltd, London, GB; & JP-A-63 037 132
- DATABASE WPIL, Nr. 84-254571 [41], Derwent Publications Ltd, London, GB; & JP-A-59 155 478

## Beschreibung

Die Erfindung betrifft die Verwendung einer Polymerlegierung aus Polybutadien und anderen olefinischen gesättigten oder ungesättigten Thermoplasten.

Aus der US-PS 4 386 179 sind Verschnitte von Block-Copolymeren des Typus Styrol-Butadien-Styrol (SBS) oder Styrol-Ethylen-Butylen-Styrol (SEBS) mit Silikon- und Mineralöl bekannt. Diese Verschnitte ergeben ein gut verarbeitbares Ausgangsmaterial für die Herstellung beispielsweise medizinischer Artikel wie Ballon- oder Endotrachial-Katheter. Das Endprodukt ist hochelastisch und somit für den medizinischen Einsatz geeignet. Der Nachteil der aus den bekannten Verschnitten hergestellten Endprodukte ist jedoch darin zu sehen, daß ihr Einsatzzweck auf bestimmte Anwendungsgebiete beschränkt ist. So sind diese Verschnitte beispielsweise nicht anwendbar bei der Herstellung von Leitungen für medizinische Flüssigkeiten, für Blut und spezielle fetthaltige Lebensmittel-Flüssigkeiten. Solche Flüssigkeiten können Bestandteile der Ausgangsmaterialien - (vornehmlich die Mineralöle) - aus den Schlauchwandungen auswaschen, wodurch die durchgeleitete Flüssigkeit verunreinigt wird.

Aus der japanischen Patentanmeldung Nr. 84 - 254 571 ist es bekannt, Polybutadien mit anderen thermoplastischen Materialien zu vermischen. Der Nachteil dieser Erfindung wird darin gesehen, daß Legierungen aus diesen Materialien zum Schmelzebruch neigen. Dadurch schieden Formteile, Profile und dergleichen wegen rauher Oberfläche für eine Verwendung im Kontakt mit Blut und Gewebe von vornherein aus.

Bekannt sind ferner Verschnitte von Polybutadien mit Block-Copolymeren unter Zuhilfenahme von Vernetzern auf Schwefelbasis. Dieses bekannte Verfahren hat das Ziel, die Verarbeitbarkeit solcher Verschnitte, die anschließend vulkanisiert werden, zu verbessern. Bei den bekannten Verschnitten wurden Zusätze von 5-30 Gewichtsprozent Polybutadien zu den Block-Copolymeren beschrieben.

Aufgrund des Vernetzergehaltes sind derartige Verschnitte für den medizinischen Bereich genauso wenig einsetzbar wie für den Lebensmittel-Bereich.

Bekannt sind ferner die Vorteile des Werkstoffes Polybutadien gegenüber Polyvinylchlorid. Polybutadien ist weichmacherfrei und frei von PVC-Anteilen. Damit ist die Entsorgung von aus Polybutadien bestehenden Gegenständen problemlos. Polybutadien besitzt ferner keine migrierenden Bestandteile, die beispielsweise Durchflußgut verunreinigen könnten. Auch erfolgt keine Wirkstoffabsorption aus bestimmten Medikamenten. Fetthaltige Medien wie Blut, Milch, fetthaltige Ernährungslösungen usw. haben keine Möglichkeit, Rezepturbestandteile aus den aus Polybutadien gefertigten Produkten herauszulösen. Diese Produkte haben ferner ein niedriges spezifisches Gewicht bei hoher Eigenelastizität, so daß sie als ideal für die Herstellung von Produkten im medizinischen Bereich oder für die Lebensmittelherstellung sein könnten.

Als Nachteile solcher Produkte aus Polybutadien sind jedoch herauszustellen, daß diese eine schlechte Verklebbarkeit und damit eine schlechte Konfektionsmöglichkeit aufwiesen. Ferner besitzen solche Produkte eine niedrigere Temperaturbeständigkeit, was eine Sterilisierung mit Heißdampf von vornherein ausschließt. Auch die Knickbeständigkeit solcher Produkte ist schlecht, das Rückstellvermögen ist mit PVC-Produkten nicht vergleichbar und auch die Oberfläche ist aufgrund der schwierigen Verarbeitungsmöglichkeit rauh und also für den Einsatz in medizinischen bzw. Lebensmittelbereichen nicht geeignet.

Hier setzt die Erfindung ein, die es sich zur Aufgabe gestellt hat, eine Polymerlegierung unter Verwendung von Polybutadien anzugeben, die ohne Vernetzungsmittel bleibt und die sowohl von der Oberflächeneigenschaft als auch von der Verklebbarkeit und der Verbesserung des Schmelzebruch-Verhaltens die positiven Eigenschaften des Polybutadiens erhält und seine negativen Eigenschaften weitgehend ausschließt.

Erfindungsgegenstand ist eine Polymeriegierung aus Polybutadien und anderen olefinisch gesättigten oder ungesättigten Thermoplasten, wobei das Polybutadien ein 1,2- oder 1,4-Polymerisat ist, dem als Mischungspartner ein thermoplastisch-elastisches Block-Copolymer mit Polystyrol-Endblöcken und polyolefinisch-ungesättigten Mittelblöcken wie Polybutadien oder Polyisopren oder mit gesättigten Mittelblöcken von Polyolefinen in einem Mischungsverhältnis von vorzugsweise 60:40 Gewichtsprozent beigemischt ist, dadurch gekennzeichnet, daß als oberflächenverbessernder Zuschlagstoff ein Polysiloxan mit einer Viskosität von 20-2000 centi stokes, vorzugsweise von 200-1000 centi stokes mit einem Mengenanteil von 0,6-6 Gewichtsprozent beigemischt ist.

Mit der Erfindung wird erreicht, daß die Oberfläche der zum Schmelzebruch neigenden Polybutadien-Extrudate so extrem verbessert wird, daß die Endprodukte ohne weiteres im medizinischen und im Lebensmittelbereich eingesetzt werden können. Die bei der Verarbeitung von reinem Polybutadien zu beobachtende Oberflächenrauhheit tritt nicht mehr auf. Auch schädliche Vernetzungsmittel, die gerade im medizinischen Bereich, jedoch auch im Lebensmittel-Bereich unerwünscht sind, werden nicht mehr benutzt. Ein ganz wesentlicher Vorteil ist jedoch die Tatsache, daß die von Natur aus nicht verklebbaren Polybutadiene verklebbar gemacht werden können.

Somit können auch die üblichen Konfektionsverfahren, z.B. mit Lösungsmittelklebern, beibehalten werden.

Als Basis der Erfindung werden Beispielsweise 85% Polybutadien der Handelsbezeichnung JSR RB 820 mit 15% EPDM der Handelsbezeichnung KELTAN TP 0606 der Firma DSM Deutschland GmbH & Co, Kunststoffe, Düsseldorf, verschnitten.

Diesem Verschnitt wird als oberflächenverbessernder Zuschlagstoff erfindungsgemäß ein Polysiloxan mit einer Viskosität von 20-2000 Centistokes, vorzugsweise von 200-1000 Centistokes mit einem Mengenanteil von 0,5-6 Gewichtsprozent beigemischt werden. Für das Polysiloxan gilt die allgemeine Formel (-Si(R₁)(R₂) O-)n mit R₁ , R₂=H, CH₃ oder Ph, wobei R₁, R₂ vorzugsweise Methylgruppen sind.

Mit den erfindungsgemäßen Züschlagstoffen werden die Nachteile des Werkstoffs Polybutadien gegenüber dem Werkstoff Polyvinylchlorid beseitigt und die Vorteile des Werkstoffs Polybutadien für den Einsatz im medizinischen und Lebensmittelbereich gesichert.

Der Werkstoff Polybutadien kann damit für die Herstellung medizinischer und Lebensmittelverträglicher Halbzeuge und Fertigteile verwendet werden.

## Patentansprüche

1. Polymerlegierung aus Polybutadien und anderen olefinisch gesättigten oder ungesättigten Thermoplasten, wobei das Polybutadien ein 1,2- oder 1,4-Polymerisat ist, dem als Mischungspartner ein thermoplastish-elastisches Block-Copolymer mit Polystyrol-Endblöcken und polyolefinisch-ungesättigten Mittelblöcken wie Polybutadien oder Polyisopren oder mit gesättigten Mittelblöcken von Polyolefinen in einen Mischungsverhältnis von vorzugsweise 60:40 Gewichtsprozent beigemischt ist, dadurch gekennzeichnet, daß als oberflächenverbessernder Zuschlagstoff ein Polysiloxan mit einer Viskosität von 20-2000 centi stokes, vorzugsweise von 200-1000 centi stokes mit einem Mengenanteil von 0,5-6 Gewichtsprozent beigemischt ist.

2. Verwendung einer Polymerlegierung aus Polybutadien und anderen olefinisch gesättigten oder ungesättigten Thermoplasten mit einem Mischungsverhältnis von 30:70 bis 95:5 Gewichtsprozent mit oberflächenverbessernden Zuschlagstoffen für die Herstellung medizinischer und lebensmittelverträglicher Halbzeuge oder Fertigteile.

## Claims

1. Polymer alloy of polybutadiene and other olefinically saturated or unsaturated thermoplastics, the polybutadiene being a 1,2 or 1,4-polymer that is blended with a thermoplastic-elastic block copolymer with polystyrene end blocks and polyolefinically unsaturated centre blocks such as polybutadiene or polyisoprene or with saturated centre blocks of polyolefins at a mixing ratio of preferably 60:40 per cent by weight, characterised by the fact that a polysiloxane with a viscosity of 20-2000 centi stokes, preferably of 200-1000 centi stokes, is added in an amount of 0.5-6 per cent by weight in order to enhance the surface.

2. Use of a polymer alloy of polybutadiene and other olefinically saturated or unsaturated thermoplastics mixed at a ratio of 30:70 to 95:5 per cent by weight with surface-enhancing additives for the manufacture of medical and foodstuff-compatible semi-finished or finished products.

## Revendications

1. Alliage polymère en polybutadiène et autres thermoplastiques saturés oléfiniques, le polybutadiène étant un produit de polymérisation 1,2 ou 1,4 auquel est mélangé un copolymère en masse thermoplastique élastique à titre d'associé de mélange avec des blocs finaux polystyrol et des blocs moyens non saturés polyoléfiniques tels que des polybutadiènes ou des polyisoprènes ou avec des blocs moyens saturés de polyoléfines dans un rapport de mélange de préférence 60:40 de pourcentage en poids, caractérisé en ce qu'à titre d'aggrégat améliorant la surface un polysiloxane de visocité de 20-2000 centi stokes, de préférence de 200-1000 centi stokes, est mélangé dans une quantité de 0,5-6 de pourcentage en poids.

2. Utilisation d'un alliage polymère en polybutadiène et autres thermoplastiques oléfiniques saturés ou non saturés avec un rapport de mélange de 30:70 à 95:5 de pourcentage en poids avec des aggrégats améliorant la surface pour la fabrication de produits semi-finis ou de pièces finies médicales et bien supportées par les denrées alimentires.
